(19) Europäisches Patentamt
European Patent Office
Office européen des brevets

(11) EP 2 778 420 B1

(12) EUROPEAN PATENT SPECIFICATION

(45) Date of publication and mention
of the grant of the patent:
**01.07.2015 Bulletin 2015/27**

(51) Int Cl.:
*F04C 11/00* (2006.01)          *B29C 47/92* (2006.01)
*F04C 14/28* (2006.01)

(21) Application number: **14000645.3**

(22) Date of filing: **24.02.2014**

(54) **Method of estimating life of gear pump and rubber extrusion apparatus**

Verfahren zur Schätzung der Lebensdauer einer Zahnradpumpen- und Kautschukextrusionsvorrichtung

Procédé permettant d'estimer la durée de vie d'une pompe à engrenages et appareil d'extrusion de caoutchouc

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2013 JP 2013048143**

(43) Date of publication of application:
**17.09.2014 Bulletin 2014/38**

(73) Proprietor: **TOYO TIRE & RUBBER CO., LTD .**
**Osaka-shi, Osaka 550-0002 (JP)**

(72) Inventors:
• **Niwa, Katsuji**
**Osaka-shi, Osaka, 550-0002 (JP)**

• **Kubota, Yoshifumi**
**Osaka-shi, Osaka, 550-0002 (JP)**
• **Komo, Makoto**
**Osaka-shi, Osaka, 550-0002 (JP)**

(74) Representative: **Strehl Schübel-Hopf & Partner**
**Maximilianstrasse 54**
**80538 München (DE)**

(56) References cited:
**JP-A- H08 216 230       JP-A- 2004 358 738**
**JP-A- 2009 196 315       JP-A- 2012 000 949**

**Description**

BACKGROUND OF THE INVENTION

FIELD OF THE INVENTION

The present invention relates to a method of estimating the life of a gear pump and a rubber extrusion apparatus.

BACKGROUND ART

There is a method in which a rubber member is molded by winding a ribbon-like rubber strip around a rotating molding drum. The ribbon-like rubber strip is molded by kneading rubber in an extruder and extruding the kneaded rubber to the outside from a die.

In the molding of the rubber strip, since a uniform cross-sectional shape of the rubber strip is obtained by constantly discharging the rubber that is extruded from the die, a rubber extrusion apparatus is used in which a gear pump is provided between the extruder and the die.

When the gear pump is used over a long period of time, a gear contained in a casing is worn out, a constant amount of the rubber is not supplied to the die, and a discharge amount of the rubber being extruded from the die changes. In particular, the gear pump is likely to fluctuate a discharge amount of the rubber being extruded when the gear is in an acceleration state, for example, immediately after the rubber extrusion apparatus starts molding the rubber strip from a stationary state.

When a desired performance is not obtained, the gear pump is replaced with a new one or is repaired, but it is necessary to adjust a production plan for the time of the replacement or the repair of the gear pump, or to procure a replacement part of the gear pump at a proper time so that production efficiency of the rubber extrusion apparatus is improved. Accordingly, it is desirable to estimate the life of the gear pump and a time of a replacement of the gear pump.

In a kneading extruder that includes a supply unit, a kneading unit and a metering unit, JP-A-8-216230 discloses a method of detecting vibrations occurring in the supply unit, the kneading unit and the metering unit, of monitoring an operation state of the kneading extruder by an analysis of waveforms of the vibrations, and of estimating an occurrence of a malfunction.

However, the document discloses the fact that an occurrence of a malfunction is estimated based on vibrations occurring when the kneading extruder is operated, but in the document, an amount of the rubber being discharged from the gear pump is not described. The vibration-based estimation is appropriate for estimation of a fatigue fracture such as a crack occurring in the kneading extruder, but is not appropriate for estimation of a slowly progressing malfunction such as wear of the gear pump.

JP-UM-A-4-73526, JP-B-6-26710 and Japanese Patent No. 4,103,036 disclose the fact that the number of rotations of the gear pump and a discharge amount of rubber being extruded from the gear pump are detected. The documents describe the fact that a rotational speed of the gear is adjusted to obtain a constant amount of the rubber being discharged from the gear pump, but do not suggest a technology in which the life of the gear pump is estimated.

SUMMARY OF THE INVENTION

The present invention is made in consideration of the above points, and an object of the present invention is to provide a method of estimating the life of a gear pump, in which the life of the gear pump can be estimated, and a rubber extrusion apparatus.

According to an aspect of the present invention, there is provided a method of estimating a life of a gear pump. The method includes detecting the number of rotations of a pair of gears that rotate in a state where the gears mesh with each other, and a discharge amount of rubber that is extruded from the gear pump; calculating, based on the number of rotations and the discharge amount of the rubber which are detected, a ratio (T1/T) of a measured value T1 of the discharge amount of the rubber that is extruded from the gear pump per one rotation of the gear to a theoretical value T of the discharge amount of the rubber that is extruded from the gear pump per one rotation of the gear; and estimating the life of the gear pump based on the calculated ratio (T1/T).

According to an aspect of the present invention, there is provided a rubber extrusion apparatus that includes a gear pump having a pair of gears that rotate in a state where the gears mesh with each other, an extruder which supplies rubber to the gear pump, and a die from which the rubber extruded from the gear pump is discharged to the outside, and the apparatus includes a number-of-rotations detection unit that detects the number of rotations of the gear; a discharge amount detection unit that detects a discharge amount of the rubber being extruded from the gear pump; a calculation unit that, based on a value detected by the number-of-rotations detection unit and a value detected by the discharge amount detection unit, calculates a ratio (T1/T) of a measured value T1 of the discharge amount of the rubber that is extruded from the gear pump per one rotation of the gear to a theoretical value T of the discharge amount of the rubber that is extruded from the gear pump per one rotation of the gear; and an estimation unit that estimates a life of the gear pump based on the ratio (T1/T) calculated by the calculation unit.

In a preferred aspect of the present invention, the method of estimating the life of the gear pump may include storing the ratio (T1/T) and an operation amount in a state where the ratio (T1/T) correlates with the operation amount, in which the ratio (T1/T) is a ratio calculated from when an operation of the gear pump starts to a present time, and the operation amount is an amount at a time when the ratio (T1/T) is calculated; calculating an approximate function that indicates a relationship between the stored ratio (T1/T) and the operation amount; and estimating the life of the gear pump based on the calculated approximate function.

In another aspect, the method of estimating the life of the gear pump may include calculating the number of rotations of the gear from an integral value obtained by integrating a rotational speed of the gear with a rotational time of the gear. In still another aspect, the method of estimating the life of the gear pump may include detecting a pressure of the rubber being supplied to the gear pump; and detecting, when the detected pressure of the rubber is greater than a reference value, the number of rotations of the gear and a discharge amount of the rubber being extruded from the gear pump.

According to the aspects of the present invention, it is possible to estimate the life of the gear pump. It is possible to adjust a production plan for a time of a replacement or a repair of the gear pump, or to procure a replacement part of the gear pump at a proper time. It is possible to improve production efficiency of the rubber extrusion apparatus.

## BRIEF DESCRIPTION OF THE DRAWINGS

Fig. 1 is a schematic view illustrating a rubber extrusion apparatus according to a first embodiment.
Fig. 2 is a block diagram illustrating a control unit of the rubber extrusion apparatus in Fig. 1.
Fig. 3 is a view illustrating a pressure on a side of an outlet of a gear pump and a rotational speed of a gear immediately after an operation of the rubber extrusion apparatus in Fig. 1 starts.
Fig. 4 is a flow chart illustrating a sequence of estimating the life of the gear pump.
Fig. 5 is a view illustrating a relationship between an operation amount of the gear pump and a discharge efficiency $\eta$.
Fig. 6 is a schematic view illustrating a rubber extrusion apparatus according to a second embodiment.

## DETAILED DESCRIPTION OF THE INVENTION

### First Embodiment

Hereinafter, a first embodiment of the present invention will be described with reference to the accompanying drawings.

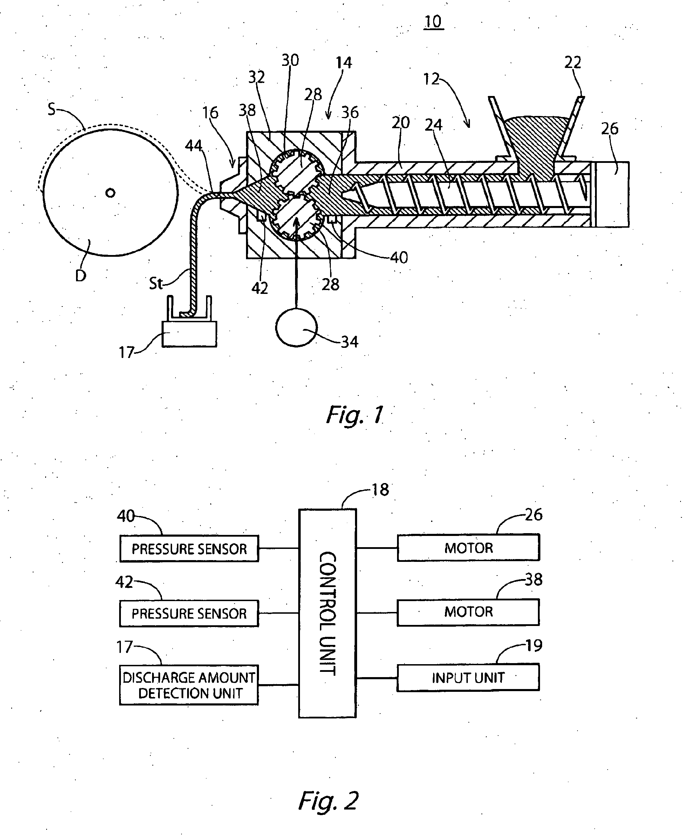

Fig. 1 is a schematic view illustrating a rubber extrusion apparatus 10 according to the embodiment. Fig. 2 is a block diagram illustrating a configuration of controlling the rubber extrusion apparatus 10. The rubber extrusion apparatus 10 is an apparatus that supplies a rubber strip S to a molding drum D which rotates, and molds a pneumatic tire as a rubber member on an outer circumferential surface of the molding drum D. The rubber extrusion apparatus 10 includes an extruder 12; a gear pump 14; a die 16; a discharge amount detection unit 17; and a control unit 18. The embodiment exemplifies a case where the rubber extrusion apparatus 10 molds a pneumatic tire, but the invention can be used to mold various rubber members.

The extruder 12 has a cylindrical barrel 20; a hopper 22 that is connected to a supply port of the barrel 20; a screw 24 that kneads rubber and sends the kneaded rubber to a proximal end side (that is, a side of the gear pump 14); and a motor 26 that rotates the screw 24. When the motor 26 controlled by the control unit 18 rotates the screw 24, the extruder 12 kneads the rubber supplied into the barrel 20 from the hopper 22, and supplies the kneaded rubber to a side of an inlet of the gear pump 14.

The gear pump 14 is connected to a proximal end side of the extruder 12 in an extrusion direction, and the gear pump 14 includes a pair of gears 28 that rotate in a state where the gears mesh with each other, and a casing 32 provided with a gear chamber 30 that contains the gears 28.

Each of the gears 28 is rotationally driven by a motor 34, and the number of rotations of each of the gears 28 is controlled by the control unit 18. For illustration purposes, the gears 28 are illustrated to form a row in a vertical direction in Fig. 1, but in practicality, the gears 28 are arranged to form a row in an in-plane direction (the rotational shaft of the gear 28 is directed to be vertical in Fig. 1)

The casing 32 is provided with an inlet chamber 36 between the gear chamber 30 and the extruder 12, and is provided with an outlet chamber 38 between the gear chamber 30 and the die 16. When the gears 28 do not mesh with each other, in the gear pump 14, the rubber supplied to the inlet chamber 36 from the extruder 12 enters a tooth space 28a, and is sent to the outlet chamber 38 by a rotation of the gears 28.

A pressure sensor 40 is provided in the inlet chamber 36 of the gear pump 14 to detect a pressure in the inlet chamber 36, that is, a pressure of the rubber supplied to the gear pump 14 from the extruder 12. The pressure sensor 40 outputs the detected pressure in the inlet chamber 36 to the control unit 18.

A pressure sensor 42 is provided in the outlet chamber 38 of the gear pump 14 to detect a pressure in the outlet chamber 38, that is, a pressure of the rubber sent from the gear pump 14. The pressure sensor 42 outputs the detected pressure in the outlet chamber 38 to the control unit 18.

The die 16 is provided with a discharge port 44 that has a shape conforming to a cross-sectional shape of the rubber strip S. The die 16 discharges the rubber sent from the gear pump 14 to the outside via the discharge port 44, and continuously extrusion-molds the ribbon-like rubber strip S.

The rubber strip S extruded from the die 16 can have various sizes depending on a rubber member that is molded on the outer circumferential surface of the molding drum D. The cross-section of the rubber strip S is not limited to a specific shape, and can have various and preferred shapes such as a triangular shape, a crescentic shape, a circular shape or a rectangular shape, depending on a finished cross-sectional shape thereof.

When an inspection operation to be described later is carried out, the discharge amount detection unit 17 is configured to have a scale that detects the weight of rubber (rubber strip St for inspection) extruded from the discharge port 44 of the die 16, and the discharge amount detection unit 17 outputs the detected weight (discharge amount) of the rubber strip St for inspection to the control unit 18.

The control unit 18 is configured to have a micro computer and a memory. As illustrated in Fig. 2, a pressure in the inlet chamber 36 input from the pressure sensor 40; a pressure in the outlet chamber 38 input from the pressure sensor 42; a weight (discharge amount) Q of the rubber strip St for inspection detected by the discharge amount detection unit 17; and a signal from an input unit 19 such as a keyboard are input into the control unit 18.

The control unit 18 also functions as an operation amount acquisition unit that acquires an operation amount of the rubber extrusion apparatus 10; a number-of-rotations detection unit that detects the number of rotations of the gear 28; a calculation unit that calculates a ratio $\eta$ (= T1/T, and hereinafter, referred to as a discharge efficiency $\eta$) of a measured value T1 to a theoretical value T of a discharge amount of the rubber that is extruded from the gear pump 14 per one rotation of the gear; and an estimation unit that estimates the life of the gear pump 14 based on the discharge efficiency $\eta$.

Based on inputs from the pressure sensors 40 and 42 and the discharge amount detection unit 17, the control unit 18 controls the motor 26 that rotationally drives the screw 24 and the motor 34 that rotationally drives the gears 28. Accordingly, the control unit 18 executes a normal operation in which the rubber strip S is continuously molded and supplied to the molding drum D, and an inspection operation in which the life of the gear pump 14 is estimated.

In the normal operation, the control unit 18 controls the motor 26 of the extruder 12 to rotate the screw 24. When a pressure in the inlet chamber 36 detected by the pressure sensor 40 reaches a predetermined pressure or greater, the control unit 18 controls the motor 34 to rotate the gear 28 in a stationary state. Accordingly, the gear pump 14 sends the rubber in the outlet chamber 38 to the die 16 and thus, the rubber strip S is continuously extruded from the discharge port 44 and is molded. When a desirable length of the rubber strip S is extruded, the control unit 18 stops the motor 34 to suspend the molding of the rubber strip S.

When the aforementioned normal operation is executed, the control unit 18 adds up the number of days for which the rubber extrusion apparatus 10 is operated from when the gear pump 14 starts anew, and the control unit 18 stores an added-up value as an operation amount of the rubber extrusion apparatus 10. The control unit 18 adds up the number of operation days of the rubber extrusion apparatus 10. In addition, for example, the control unit 18 may store, as an operation amount, a value obtained by adding up an actual operation time of the rubber extrusion apparatus 10 from when an operation of the gear pump 14 starts to a present time; the number (a value obtained by adding up the number of rotations of the gear 28 from when the operation of the gear pump 14 starts to the present time) of rotation of the gear 28 of the gear pump 14; or the number of tires being produced.

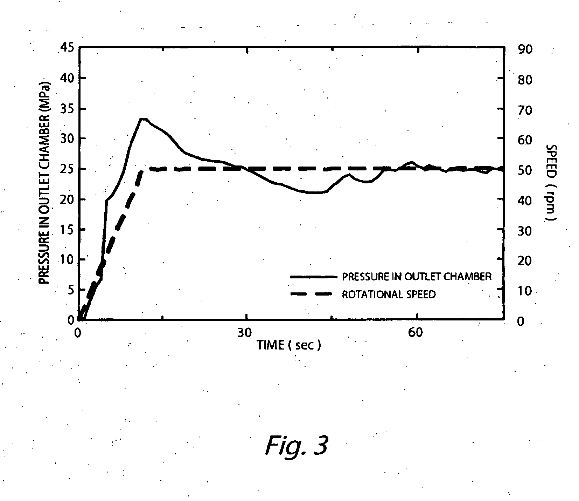

As illustrated in Fig. 3, when the gear 28 is in an acceleration state immediately after the gear 28 starts to rotate from a stationary state, a pressure in the outlet chamber 38 is likely to abruptly change and a load is likely to be applied to the gear pump 14 or the die 16. Even when the gear 28 is in a deceleration state from a rotation state to a stop of the gear 28, a pressure in the outlet chamber 38 is likely to abruptly change and a load is likely to be applied to the gear pump 14 or the die 16. For this reason, when the gear 28 is in acceleration and deceleration states, the control unit 18 controls the motor 34 to adjust a rotational speed of the gear 28 in such a manner that a pressure in the outlet chamber 38 detected by the pressure sensor 42 satisfies a predetermined condition.

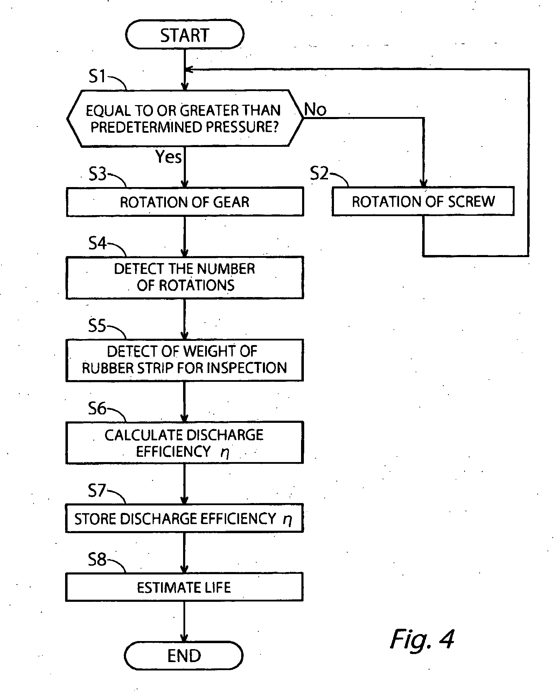

The control unit 18 carries out an inspection operation according to a sequence illustrated in Fig. 4. First, the control unit 18 determines whether or not a pressure in the inlet chamber 36 detected by the pressure sensor 40 reaches a predetermined pressure (reference value) or greater (step S1).

If the pressure detected by the pressure sensor 40 is smaller than the predetermined pressure, the control unit 18 controls the motor 26 of the extruder 12 to rotate the screw 24, and the rubber in the barrel 20 is supplied to the inlet chamber 36 of the gear pump 14. Thereafter, a process returns to step S1 (step S2).

If the pressure detected by the pressure sensor 40 is greater than the predetermined pressure, the control unit 18 controls the motor 34 to rotate the gear 28 of the gear pump 14, the rubber in the outlet chamber 38 is sent to the die 16, and the rubber strip St for inspection is extruded from the discharge port 44 and is molded (step S3).

In step S3, it is possible to arbitrarily set a rotational speed of the gear 28 when the rubber strip St for inspection is extrusion-molded, but the rotational speed of the gear 28 is preferably set to the same as that in the normal operation in which the rubber strip S is molded. For example, it is possible to accelerate the gear 28 up to 50 rpm in 5 seconds from a stationary state, and then to rotate the gear 28 at 50 rpm for 20 seconds and then to stop the gear 28 in 2 seconds from 50 rpm.

The control unit 18 detects the number (the number of rotations) R by which the gear 28 of the gear pump 14 rotates during the inspection operation (that is, while the gear 28 rotates) (step S4). Specifically, the control unit 18 sequentially detects a rotational speed of the motor 34 every predetermined sampling time (for example, every 0.2 seconds), and, based on the detected result, detects the number R by which the gear 28 rotates during the inspection operation. For example, an integral value may be calculated by integrating a rotational speed of the gear 28 with a rotational time of the gear 28 using a sectional measurement of rotational speeds of the motor 34 which are detected at every sampling time, and the number R of rotations of the gear 28 may be calculated based on the integral value.

The discharge amount detection unit 17 detects the weight of the rubber strip St for inspection which is extruded from the discharge port 44 of the die 16 during the inspection operation, and the discharge amount detection unit 17 inputs the detected result to the control unit 18 as a discharge amount Q of the rubber that is extruded from the gear pump 14 during the inspection operation (step S5).

When the discharge amount Q is input from the discharge amount detection unit 17, the control unit 18 calculates the measured value T1 of a discharge amount of the rubber that is extruded from the gear pump 14 per one rotation of the gear 28 using the following equation (1), the number R of rotation of the gear 28 during the inspection operation, and the discharge amount Q during the inspection operation. The control unit 18 calculates the discharge efficiency $\eta$ (= T1/T) that is a ratio of the measured value T1 of the discharge amount to the theoretical value T of the discharge amount of the rubber that is extruded from the gear pump 14 per one rotation of the gear 28.

When the gear has a capacity (volume) C determined by the gear 28 of the gear pump 14 and the shape of the gear chamber 30, and a density of the rubber supplied to the gear pump 14 is p, it is possible to calculate the theoretical value T of a discharge amount of the rubber that is extruded from the gear pump 14 per one rotation of the gear 28, using the following equation (2). Accordingly, it is possible to calculate the discharge efficiency $\eta$ using the following equation (3), the discharge amount Q during the inspection operation, the gear capacity C, the number R of rotation of the gear 28, and the rubber density $\rho$ (step S6). It is possible to suitably set the gear capacity C and the rubber density $\rho$ via the input unit 19.

$$T1 = Q/R \quad \text{equation (1)}$$

$$T = C \times \rho \quad \text{equation (2)}$$

$$\eta = T1/T = Q/(R \times C \times \rho) \quad \text{equation (3)}$$

In a state where the calculated discharge efficiency $\eta$ correlates with an operation amount of the gear pump 14 that the control unit 18 stores when the discharge efficiency $\eta$ is calculated, the control unit 18 stores the calculated discharge efficiency $\eta$ and the operation amount of the gear pump 14 (step S7).

When the rubber extrusion apparatus 10 reaches a predetermined operation amount between when an operation of the new gear pump 14 starts and when the gear pump 14 is replaced with a new one or is repaired, or when a maintenance of equipment including the rubber extrusion apparatus 10 is carried out, a plurality of the aforementioned inspection operations are carried out at arbitrary times during which the normal operation is not carried out.

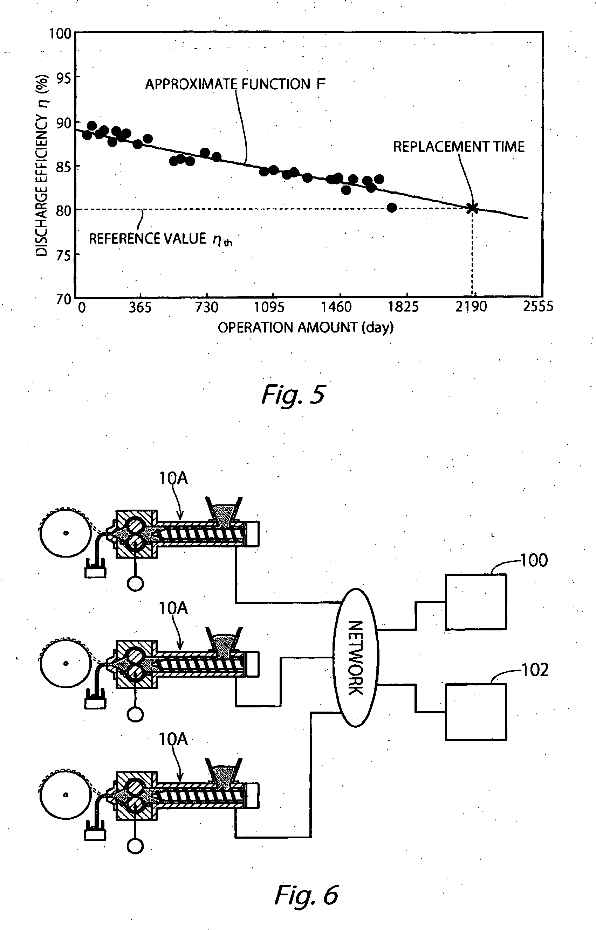

As illustrated in Fig. 5, the control unit 18 calculates an approximate function F that indicates a relationship between the discharge efficiency $\eta$, which is obtained in the inspection operation carried out up to a present time, and the operation amount of the gear pump 14, and the control unit 18 calculates an operation amount of the gear pump 14 when the discharge efficiency $\eta$ from the calculated approximate function reaches a predetermined reference value $\eta$th or less. When the discharge efficiency $\eta$ reaches the predetermined reference value $\eta$th or less, the operation amount of the gear pump 14 is considered to reach a level at which it is necessary to replace the gear pump 14 with a new one or to repair the gear pump 14. Accordingly, the control unit 18 estimates the life of the gear pump 14 (step S8).

The approximate function F indicates a relationship between the discharge efficiency $\eta$ and the operation amount of the gear pump 14, and the approximate function F may be either a linear function or a hyperbolic function. It is possible to suitably set the reference value $\eta$th for the discharge efficiency $\eta$ via the input unit 19.

In the embodiment described above, based on the discharge efficiency $\eta$ that is a ratio of the measured value T1 of the discharge amount of the rubber that is extruded from the gear pump 14 per one rotation of the gear 28 to the theoretical value T, the life of the gear pump 14 is estimated and thus, it is possible to accurately estimate the life of the gear pump 14.

That is, due to the use of the gear pump 14, the gear 28 is worn out, and a gap between the gear 28 and the gear chamber 30 of the casing 32 becomes large. Since the rubber increasingly flows back through the gear pump 14 as the gap becomes large and thus, the amount of rubber discharged from the gear pump 14 decreases, it is possible to estimate a wear amount of the gear 28 from the discharge efficiency $\eta$ and to accurately estimate the life of the gear pump 14.

In the embodiment, since, from the discharge efficiency $\eta$ used for estimating the life of the gear pump 14, a discharge amount of the rubber being extruded from the gear pump 14 is converted into the discharge amount per one rotation of the gear 28, it is possible to carry out the inspection operation even in a case where a rotation of the gear 28 is unstable, for example, like in a case where a rotational speed of the gear 28 is adjusted based on a pressure in the outlet chamber 38.

For this reason, in a case where the life of the gear pump 14 is estimated based on the amount of the rubber being extruded per unit time, until the gear 28 stably rotates, it is necessary to carry out an operation for estimating the life of the gear pump 14 after the rubber is sent from the gear pump 14. However, in the embodiment, since the aforementioned inspection operation is carried out, it is not necessary to stabilize the rotation of the gear 28, it is possible to prevent the rubber from being wasted, and it is possible to carry out the inspection operation under arbitrary conditions. In addition, since the inspection operation is carried out under the same conditions as in the normal operation in which the rubber strip S is extrusion-molded, it is possible to estimate the life of the gear pump in a greatly reliable manner.

In the embodiment, since the inspection operations are carried out from when the operation of the new gear pump 14 starts to a present time, and the life of the gear pump 14 is estimated based on the approximate function that indicates a relationship between a plurality of discharge efficiency $\eta$ and an operation amount of the gear pump 14, it is possible to further improve reliability of estimation of the life of the gear pump.

In the embodiment, when a pressure in the inlet chamber 36 of the gear pump 14 is greater than a predetermined pressure, the gear 28 of the gear pump 14 is driven to rotate, and the rubber strip St for inspection is extrusion-molded. Accordingly, it is possible to prevent an inspection failure caused when the inlet chamber 36 is insufficiently filled with the rubber.

The embodiment describes a case where the life of the gear pump 14 is estimated based on the discharge efficiency $\eta$ calculated during the inspection operation, but a rotational speed of the gear 28 during the normal operation may be compensated for using the calculated discharge efficiency $\eta$. That is, when the discharge efficiency $\eta$ decreases due to the use of the gear pump 14, the amount of the rubber being extruded during the normal operation decreases. Accordingly, the gear pump 14 may be set at a high rotational speed so as to compensate for decrease in the amount of the rubber.

Second Embodiment

Fig. 6 is a schematic view illustrating a rubber extrusion apparatus 10A according to a second embodiment. In the embodiment, rubber member manufacturing equipment is configured to have a plurality of the rubber extrusion apparatuses 10A, and the control unit 18 of each of the rubber extrusion apparatuses 10A is connected to a database 100 and a terminal 102 via a communication network. Since the database 100 retains information such as the gear capacity C, the rubber density p, the discharge efficiency $\eta$ and an operation amount of the gear pump 14 obtained by the control unit 18 of each of the rubber extrusion apparatuses 10A, it is possible to read the information via the terminal 102 in the communication network.

In the embodiment, it is possible to figure out the life of the gear pump 14 of each of the rubber extrusion apparatuses 10A in an integrated manner, and it is easy to manage the entire rubber member manufacturing equipment. In the second embodiment, other configurations and operation effects are the same as in the first embodiment, and a description thereof will be omitted.

Other Embodiment

The aforementioned embodiment describes the case where the life of the gear pump 14 is estimated based on the approximate function that indicates a relationship between the discharge efficiency $\eta$ obtained during the inspection operations and an operation amount of the gear pump 14. However, the life of the gear pump 14 may be estimated based on the discharge efficiency η obtained during only one inspection operation. For example, when the discharge efficiency η obtained during the inspection operation is equal to or less than a predetermined value, it is determined that it is necessary to replace the gear pump 14 with a new one or to repair the gear pump 14.

The embodiments of the present invention are described. However, the embodiments are proposed as examples, and are not intended to limit the scope of the invention. Other various embodiments can be put into practice, and it is possible to make various omissions, replacements, and modifications to the embodiments without departing from the spirit of the invention. Similarly to the fact that the embodiments and the modifications are included in the scope and the spirit of the invention, the embodiments and the modifications are included in the invention described in the patent claims and equivalent scopes.

## Claims

1. A method of estimating a life of a gear pump having a pair of gears that rotate in a state where the gears mesh with each other, the method comprising:

    detecting the number of rotations of the gears and a discharge amount of rubber that is extruded from the gear pump;
    calculating, based on the number of rotations and the discharge amount of the rubber which are detected, a ratio (T1/T) of a measured value T1 of the discharge amount of the rubber that is extruded from the gear pump per one rotation of the gears to a theoretical value T of the discharge amount of the rubber that is extruded from the gear pump per one rotation of the gears; and
    estimating the life of the gear pump based on the calculated ratio (T1/T).

2. The method of estimating a life of a gear pump according to claim 1, further comprising:

    storing the ratio (T1/T) and an operation amount in a state where the ratio (T1/T) correlates with the operation amount, in which the ratio (T1/T) is a ratio calculated from when an operation of the gear pump starts to a present time, and the operation amount is an amount at a time when the ratio (T1/T) is calculated;
    - calculating an approximate function that indicates a relationship between the stored ratio (T1/T) and the operation amount; and
    estimating the life of the gear pump based on the calculated approximate function.

3. The method of estimating a life of a gear pump according to claim 1, further comprising:

    calculating the number of rotations of the gears from an integral value obtained by integrating a rotational speed of the gear with a rotational time of the gears.

4. The method of estimating a life of a gear pump according to claim 1, further comprising:

    detecting a pressure of the rubber being supplied to the gear pump; and
    detecting, when the detected pressure of the rubber is greater than a reference value, the number of rotations of the gears and a discharge amount of the rubber being extruded from the gear pump.

5. A rubber extrusion apparatus that includes a gear pump having a pair of gears that rotate in a state where the gears mesh with each other, an extruder which supplies rubber to the gear pump, and a die from which the rubber extruded from the gear pump is discharged to the outside, the apparatus comprising:

    a number-of-rotations detection unit that detects the number of rotations of the gears;
    a discharge amount detection unit that detects a discharge amount of the rubber being extruded from the gear pump;
    a calculation unit that, based on a value detected by the number-of-rotations detection unit and a value detected by the discharge amount detection unit, calculates a ratio (T1/T) of a measured value T1 of the discharge amount of the rubber that is extruded from the gear pump per one rotation of the gears to a theoretical value T of the discharge amount of the rubber that is extruded from the gear pump per one rotation of the gears; and
    an estimation unit that estimates a life of the gear pump based on the ratio (T1/T) calculated by the calculation unit.

**Patentansprüche**

1. Verfahren zum Schätzen einer Lebensdauer einer Zahnradpumpe mit einem Paar von Zahnrädern, die in einem Zustand rotieren, in dem die Zahnräder ineinander eingreifen, wobei das Verfahren umfasst:

   Detektieren der Anzahl von Rotationen der Zahnräder und einer aus der Zahnradpumpe extrudierten Abgabemenge von Gummi;
   Berechnen, auf der Grundlage der Anzahl von Rotationen und der Abgabemenge des Gummis, die detektiert worden sind, eines Verhältnisses (T1/T) eines gemessenen Wertes T1 der Abgabemenge des Gummis, das aus der Zahnradpumpe bei einer Rotation der Zahnräder extrudiert wird, zu einem theoretischen Wert T der Abgabemenge an Gummi, das aus der Zahnradpumpe bei einer Rotation der Zahnräder extrudiert wird; und
   Schätzen der Lebensdauer der Zahnradpumpe auf der Grundlage des berechneten Verhältnisses (T1/T).

2. Verfahren zum Schätzen einer Lebensdauer einer Zahnradpumpe nach Anspruch 1, ferner umfassend:

   Speichern des Verhältnisses (T1/T) und einer Betriebsmenge in einem Zustand, in dem das Verhältnis (T1/T) mit der Betriebsmenge korreliert, wobei das Verhältnis (T1/T) ein Verhältnis ist, das von einem Zeitpunkt, zu dem der Betrieb der Zahnradpumpe beginnt, bis zu einem gegenwärtigen Zeitpunkt berechnet wird und wobei die Betriebsmenge eine Menge zu einem Zeitpunkt ist, zu dem das Verhältnis (T1/T) berechnet wird;
   Berechnen einer Approximationsfunktion, die eine Beziehung zwischen dem gespeicherten Verhältnis (T1/T) und der Betriebsmenge angibt; und
   Schätzen der Lebensdauer der Zahnradpumpe auf der Grundlage der berechneten Approximationsfunktion.

3. Verfahren zum Schätzen einer Lebensdauer einer Zahnradpumpe nach Anspruch 1, ferner umfassend:

   Berechnen der Anzahl von Rotationen der Zahnräder aus einem Integralwert, der durch Integrieren einer Rotationsgeschwindigkeit der Zahnräder mit einer Rotationsdauer der Zahnräder erhalten wird.

4. Verfahren zum Schätzen einer Lebensdauer einer Zahnradpumpe nach Anspruch 1, ferner umfassend:

   Detektieren eines Drucks des der Zahnradpumpe zugeführten Gummis; und
   Detektieren der Anzahl von Rotationen der Zahnräder und einer Abgabemenge des aus der Zahnradpumpe extrudierten Gummis, wenn der detektierte Druck des Gummis größer als ein Bezugswert ist.

5. Gummiextrusionsvorrichtung, die eine Zahnradpumpe mit einem Paar von Zahnrädern, die in einem Zustand rotieren, in dem die Zahnräder ineinander eingreifen, eine Extrusionseinrichtung, die der Zahnradpumpe Gummi zuführt, und eine Gussform, aus der das aus der Zahnradpumpe extrudierte Gummi nach außen abgegeben wird, enthält, wobei die Vorrichtung umfasst:

   eine Detektionseinheit für die Anzahl von Rotationen, die die Anzahl von Rotationen der Zahnräder detektiert;
   eine Detektionseinheit für Abgabemengen, die eine Abgabemenge des aus der Zahnradpumpe extrudierten Gummis detektiert;
   eine Berechnungseinheit, die, auf der Grundlage eines von der Detektionseinheit für die Anzahl von Rotationen detektierten Wertes und eines von der Detektionseinheit für Abgabemengen detektierten Wertes, ein Verhältnis (T1/T) eines gemessenen Wertes T1 der Abgabemenge des aus der Zahnradpumpe bei einer Rotation der Zahnräder extrudierten Gummis zu einem theoretischen Wert T der Abgabemenge des aus der Zahnradpumpe bei einer Rotation der Zahnräder extrudierten Gummis berechnet; und
   eine Schätzeinheit, die eine Lebensdauer der Zahnradpumpe auf der Grundlage des von der Berechnungseinheit berechneten Verhältnisses (T1/T) schätzt.

**Revendications**

1. Procédé d'estimation d'une durée de vie d'une pompe à engrenages comportant une paire d'engrenages qui tournent dans un état dans lequel les engrenages s'engrènent les uns avec les autres, le procédé comportant de :

   détecter le nombre de rotations des engrenages et une quantité de décharge de caoutchouc qui est extrudé à partir de la pompe à engrenages,

calculer, sur la base du nombre de rotations et de la quantité de décharge du caoutchouc qui sont détectés, un rapport (T1/T) d'une valeur mesurée T1 de la quantité de décharge du caoutchouc qui est extrudé à partir de la pompe à engrenages pour une rotation des engrenages sur une valeur théorique T de la quantité de décharge du caoutchouc qui est extrudé à partir de la pompe à engrenages pour une rotation des engrenages, et estimer la durée de vie de la pompe à engrenages sur la base du rapport calculé (T1/T).

**2.** Procédé d'estimation d'une durée de vie d'une pompe à engrenages selon la revendication 1, comportant en outre de :

mémoriser le rapport (T1/T) et une quantité d'actionnement dans un état où le rapport (T1/T) est en corrélation avec la quantité d'actionnement, dans lequel le rapport (T1/T) est un rapport calculé à partir du moment où un actionnement de la pompe à engrenages commence à un instant présent, et la quantité d'actionnement est une quantité à un moment où le rapport (T1/T) est calculé,
calculer une fonction d'approximation qui indique une relation entre le rapport mémorisé (T1/T) et la quantité d'actionnement, et
estimer la durée de vie de la pompe à engrenages sur la base de la fonction d'approximation calculée.

**3.** Procédé d'estimation d'une durée de vie d'une pompe à engrenages selon la revendication 1, comportant en outre :

de calculer le nombre de rotations des engrenages à partir d'une valeur d'intégrale obtenue par intégration de la vitesse de rotation des engrenages avec un moment de rotation des engrenages.

**4.** Procédé d'estimation d'une durée de vie d'une pompe à engrenages selon la revendication 1, comportant en outre de :

détecter une pression du caoutchouc étant fournie à la pompe à engrenages, et
détecter, lorsque la pression détectée du caoutchouc est supérieure à une valeur de référence, le nombre de rotations des engrenages et une quantité de décharge du caoutchouc étant extrudé à partir de la pompe à engrenages.

**5.** Appareil d'extrusion de caoutchouc qui comprend une pompe à engrenages comportant une paire d'engrenages qui tournent dans un état dans lequel les engrenages s'engrènent les uns avec les autres, une extrudeuse qui alimente en caoutchouc la pompe à engrenages, et une filière de laquelle le caoutchouc extrudé à partir de la pompe à engrenages est évacué vers l'extérieur, l'appareil comportant :

une unité de détection du nombre de rotations qui détecte le nombre de rotations des engrenages,
une unité de détection de quantité de décharge qui détecte une quantité de décharge du caoutchouc étant extrudé à partir de la pompe à engrenages,
une unité de calcul qui, sur la base d'une valeur détectée par l'unité de détection du nombre de rotations et d'une valeur détectée par l'unité de détection de quantité de décharge, calcule un rapport (T1/T) d'une valeur mesurée T1 de la quantité de décharge du caoutchouc qui est extrudé à partir de la pompe à engrenages pour une rotation des engrenages sur une valeur théorique T de la quantité de décharge du caoutchouc qui est extrudé à partir de la pompe à engrenages pour une rotation des engrenages, et
une unité d'estimation qui estime une durée de vie de la pompe à engrenages sur la base du rapport (T1/T) calculé par l'unité de calcul.

Fig. 1

Fig. 2

*Fig. 3*

EP 2 778 420 B1

```
              ┌─────────┐
              │  START  │
              └────┬────┘
                   │
   S1        ┌─────▼──────────────────┐  No
       ╱─────┤ EQUAL TO OR GREATER THAN├──────────────┐
       ╲─────┤ PREDETERMINED PRESSURE? │              │
              └─────────┬──────────────┘              │
                     Yes│                             │
   S3                   │            S2               │
   ┌──────────────────┐ │      ┌──────────────────┐   │
   │ ROTATION OF GEAR │◄┘      │ ROTATION OF SCREW │◄─┘
   └────────┬─────────┘        └────────┬──────────┘
            │                           │
   S4       ▼                           └──────────────┘
   ┌──────────────────┐
   │  DETECT THE NUMBER│
   │   OF ROTATIONS    │
   └────────┬─────────┘
   S5       ▼
   ┌──────────────────────┐
   │   DETECT OF WEIGHT OF │
   │ RUBBER STRIP FOR INSPECTION│
   └────────┬─────────────┘
   S6       ▼
   ┌──────────────────┐
   │ CALCULATE DISCHARGE│
   │   EFFICIENCY η     │
   └────────┬─────────┘
   S7       ▼
   ┌──────────────────────────┐
   │ STORE DISCHARGE EFFICIENCY η│
   └────────┬─────────────────┘
   S8       ▼
   ┌──────────────────┐
   │   ESTIMATE LIFE   │
   └────────┬─────────┘
            ▼
       ┌─────────┐
       │   END   │
       └─────────┘
```

*Fig. 4*

12

*Fig. 5*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8216230 A
- JP UMA473526 B
- JP 6026710 B
- JP 4103036 B